# EUROPEAN PATENT APPLICATION

(11) **EP 4 510 373 A1**
(43) Date of publication of application: **19.02.2025**
(21) Application number: 22962331.9
(22) Date of filing: 18.10.2022
(51) Int. Cl.: H01M 50/593

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: XU, Liangfan, Ningde, Fujian 352100 (CN); ZHOU, Wenlin, Ningde, Fujian 352100 (CN); ZHANG, Qianqian, Ningde, Fujian 352100 (CN); LI, Xing, Ningde, Fujian 352100 (CN); LI, Quankun, Ningde, Fujian 352100 (CN); NIU, Shaojun, Ningde, Fujian 352100 (CN); JIN, Haizu, Ningde, Fujian 352100 (CN)
(74) Representative: Ran, Handong
(86) International application number: PCT/CN2022/125955
(87) International publication number: WO 2024/082138

(57) **Abstract**

The present application relates to the field of batteries, and provides a battery cell, a battery and an electrical device. The battery cell comprises an outer housing, an electrode assembly and a supporting member. The outer housing has a wall portion. The electrode assembly has a body portion and a tab. **In** a first direction, the tab protrudes from the end of the body portion facing the wall portion. The tab comprises a root portion and a tab portion. The root portion is connected to the body portion and the tab portion. The supporting member is arranged on the side of the body portion facing the wall portion. The supporting member comprises a wing portion, and the tab portion is bent around the wing portion. The wing portion is provided with an accommodating portion. The accommodating portion is used for accommodating a portion of the root portion. The supporting member is arranged between the wall portion and the body portion. The tab portion is bent around the wing portion of the supporting member, such that the tab portion is folded along a fixed form so that the tab can be protected, the tab is not prone to splitting and insertion, and the safety of the battery cell is increased. The accommodating portion is provided on the wing portion, and the root portion of the tab can be accommodated in the accommodating portion. The total space occupied by the wing portion and the root portion is reduced, which is beneficial to increasing the energy density of the battery cell.

## Description

### Technical Field

The present application relates to the field of batteries, and specifically, to a battery cell, a battery and an electrical device.

### Background Art

Batteries are widely used in the field of new energy, such as electric vehicles and new energy vehicles. New energy vehicles and electric vehicles have become a new development trend in the automobile industry. For the development of battery technology, many design factors need to be considered at the same time, for example, performance parameters such as energy density, cycle life, discharge capacity, and charge-discharge rate. In addition, the safety of the battery also needs to be considered. However, the safety of current battery cells is poor.

### Summary

An object of embodiments of the present application is to provide a battery cell, a battery and an electrical device, which aim to improve the problem of poor safety of battery cells in related arts.

In a first aspect, embodiments of the present application provide a battery cell. The battery cell includes a housing, at least one electrode assembly and a support member. The housing has a wall part; the electrode assembly has a main body and at least one tab. In a first direction, the tab protrudes from an end of the main body facing the wall part, the tab includes a root part and a tab part, and the root part connects the main body and the tab part. The support member is provided at one side of the main body facing the wall part, the support member includes at least one wing part, and the tab part is bent around the wing part, wherein the wing part is provided with an accommodation part, and the accommodation part is used to accommodate a portion of the root part.

In the above technical solution, the support member is provided between the wall part and the main body of the battery cell, and the tab part is bent around the corresponding wing part of the support member, so that the tab part is folded in a fixed shape, which can protect the tab, making bifurcating and insertion of the tab not easy, and improving the safety of the battery cell. In addition, the hardness of the root part of the tab is relatively large. In the first direction, the highest portion of the root part exceeds the joint of the root part and the tab part. The total space occupied by the wing part and root part is relatively larger, resulting in a relatively small energy density of the battery cell. In the embodiments of the present application, by providing an accommodation part on the wing part of the support member, the root part of the tab can be accommodated in the accommodation part, so that the total space occupied by the wing part and the root part is reduced, and the space left for the main body may be relatively increased, facilitating improving the energy density of battery cell.

As an optional technical solution of the embodiments of the present application, in the first direction, the wing part has a first surface facing the main body, and the accommodation part is an accommodation groove recessed from the first surface in a direction away from the main body.

In the above technical solution, the accommodation part is a groove provided in the wing part. In the first direction, the accommodation part is recessed from the surface of the wing part facing the main body toward the surface of the wing part facing away from the main body. When the accommodation part is a groove, it can not only accommodate a portion of the root part, so that the total space occupied by the wing part and the root part is reduced, but also enable the wing part to have higher strength.

As an optional technical solution of the embodiments of the present application, in the first direction, the wing part has a first surface facing the main body and a second surface facing away from the main body, and the accommodation part is a through hole running through the first surface and the second surface.

In the above technical solution, the accommodation part is a through hole provided in the wing part. In the first direction, the accommodation part penetrates through the surface of the wing part facing the main body and the surface of the wing part facing away from the main body. When the accommodation part is a through hole, more accommodation space may be provided for the root part, so that most of the root part may be accommodated in the accommodation part or the root part may be allowed to pass through the accommodation part, so that the total space occupied by the wing part and the root part is further reduced, facilitating improving the energy density of battery cell.

As an optional technical solution of the embodiments of the present application, the wing part further includes a support part, the support part is located at one side of the accommodation part in the second direction, and the tab part is bent around the support part. The support part is used to support the tab part, and the second direction is perpendicular to the first direction.

In the above technical solution, the wing part is provided with a support part, and the support part can support the tab part, such that the tab part bent around the support part can maintain a fixed shape when being folded and the tab part is not easy to deform, making bifurcating and insertion of the tab not easy, and improving the safety of the battery cell. If the tab part is not supported by the support part, the tab part is easy to deform when subjected to external force and cannot maintain a fixed shape when being folded.

As an optional technical solution in the embodiments of the present application, a reinforcement part is provided in the accommodation part.

In the above technical solution, by providing a reinforcement part in the accommodation part, the strength of the wing part is strengthened, so that the wing part is not easily deformed, thereby maintaining the fixed shape of the tab part, reducing the risk of tab damage caused by deformation of the wing part, and improving the safety of battery cell.

As an optional technical solution in the embodiments of the present application, an arc transition is formed between the side wall of the accommodation part and the first surface.

In the above technical solution, since the root part of the tab is partially accommodated in the accommodation part, the tab is easy to be in contact with the joint of the side wall of the accommodation part and the first surface. By forming the arc transition between the side wall of the accommodation part and the first surface, the risk of the tab being cut is reduced, facilitating improving the safety of battery cell.

As an optional technical solution of the embodiments of the present application, in the third direction, the size of the accommodation part is larger than the size of the root part, and the third direction is perpendicular to the first direction.

In the above technical solution, the size of the accommodation part in the third direction is larger than the size of the root part in the third direction, facilitating reducing the requirements for the assembly accuracy of the support member, so that even if the position of the support member has a certain deviation, the root part can extend into the accommodation part.

As an optional technical solution of the embodiment of the present application, in the first direction, the wing part has a first surface facing the main body; in the second direction, the wing part has a first end and a second end which are oppositely provided, and the tab part is bent around the second end; the first surface is an inclined surface, and in the direction from the first end to the second end, the distance between the inclined surface and the main body gradually decreases in the first direction, to form the accommodation part at one side of the wing part facing the main body.

In the above technical solution, the first surface is provided as an inclined surface, and the first end is further away from the main body than the second end. **In** this way, the space between the first end and the main body is larger than the space between the second end and the main body, to form the accommodation part at a position near the first end, so that the root part is accommodated in the accommodation part, and the total space occupied by the wing part and the root part is reduced, which is beneficial to improving the energy density of the battery cell.

As an optional technical solution of the embodiments of the present application, the wing part has a second surface facing away from the main body, and the second surface is perpendicular to the first direction.

In the above technical solution, the second surface is a plane (horizontal surface), and the second surface is perpendicular to the first direction. In this way, in the first direction, the wing part may be regarded as being gradually thinned in a direction from the second end to the first end to form an accommodation part at the side of the wing part facing the main body.

As an optional technical solution of the embodiments of the present application, in the first direction, the portion of the root part farthest from the main body is accommodated in the accommodation part.

In the above technical solution, the portion of the root part farthest from the main body is accommodated in the accommodation part, so that the total space occupied by the wing part and the root part is reduced, facilitating improving the energy density of battery cell.

As an optional technical solution of the embodiments of the present application, the tab part includes a first connecting portion, a second connecting portion and a bending portion, and the bending portion connects the first connecting portion and the second connecting portion. The first connecting portion is connected to the root part, and in the first direction, the first connecting portion and the second connecting portion are respectively located at two sides of the wing part.

In the above technical solution, the first connecting portion is connected to the root part, and the second connecting portion is used to be connected to a conductive part to facilitate the output of the electric energy of the battery cell. The first connecting portion and the second connecting portion are respectively located at two sides of the wing part and connected by the bending portion, in this way, the tab part is folded in a fixed shape, realizing the shaping of the tab, making bifurcating and insertion of the tab not easy, and improving the safety of the battery cell.

As an optional technical solution of the embodiments of the present application, the support member includes a body part, and in the second direction, at least one side of the body part is provided with the wing part, and the tab part is bent around one end of the wing part away from the body part. The body part is used to abut against the main body. The second direction is perpendicular to the first direction.

In the above technical solution, in the scenario where cells are inverted, the body part may support the main body, so that the gravity of the main body is not easily transmitted to the tabs, making it not easy to cause tab bifurcating and insertion, and improving the safety of the battery cell. Of course, in other scenarios, for example, when the battery cell is subject to vibration, the body part may also abut against the main body, so that external force is not easy to be transmitted to the tabs through the main body, making it not easy to cause tab bifurcating and insertion, and improving the safety of the battery cell.

As an optional technical solution of the embodiments of the present application, in the second direction, the two sides of the body part are each provided with the wing part, the electrode assembly has two tabs, and the support member is located between the two tabs, and the tab part of one of the tabs is bent around its corresponding one of the wing parts.

In the above technical solution, by making the two tabs bent around the two wings located at two sides of the body part respectively, such one support member may realize the shaping of the two tabs located at the two sides of the support member, making bifurcating and insertion of the two tabs not easy and improving the safety of the battery cell.

As an optional technical solution in the embodiments of the present application, the wall part is directly connected with the tab part.

In the above technical solution, the tab is electrically connected to the wall part directly, to output or input the electric energy of the battery cell through the wall part.

As an optional technical solution in the embodiments of the present application, the battery cell includes at least one electrode terminal, the at least one electrode terminal is provided on the wall part, and the electrode terminal is directly connected to the tab part.

In the above technical solution, the tab is connected to the electrode terminal, to output or input the electric energy of the battery cell through the electrode terminal.

As an optional technical solution in the embodiments of the present application, the battery cell includes at least one electrode terminal and at least one current collector member, the at least one electrode terminal is provided on the wall part; the at least one current collector member is electrically connected to the at least one electrode terminal, and the at least one current collector member is directly connected to the at least one tab part.

In the above technical solution, the tab is connected to the current collector member, the current collector member is connected to the electrode terminal, to output or input the electric energy of the battery cell through the wall part.

In a second aspect, embodiments of the present application further provide a battery, including at least one battery cell above.

In a third aspect, embodiments of the present application further provide an electrical device, including at least one battery above. The battery is used to provide electric energy for the electrical device.

### Brief Description of Drawings

In order to illustrate the technical solutions of the embodiments of the present application more clearly, the drawings required to be used in the embodiments will be briefly introduced below. It should be understood that the drawings below only show some embodiments of the present application and thus should not be construed as limiting the scope. Those of ordinary skill in the art may also obtain other relevant drawings based on the drawings without paying creative efforts.
FIG. 1 is a schematic structural diagram of a vehicle provided by some embodiments of the present application;
FIG. 2 is an exploded view of a battery provided by some embodiments of the present application;
FIG. 3 is an exploded view of a battery cell provided by some embodiments of the present application;
FIG. 4 is a schematic structural diagram of a battery cell provided by some embodiments of the present application;
FIG. 5 is a schematic top view of a battery cell provided by some embodiments of the present application;
FIG. 6 is a sectional view of the B-B position in FIG. 5 (the accommodation part is an accommodation groove);
FIG. 7 is a schematic diagram of a front structure of a support member provided by some embodiments of the present application;
FIG. 8 is a schematic diagram of a back structure of a support member provided by some embodiments of the present application;
FIG. 9 is a sectional view of the B-B position in FIG. 5 (the accommodation part is a through hole);
FIG. 10 is a schematic diagram of a front structure of a support member provided by other embodiments of the present application;
FIG. 11 is a schematic diagram of a back structure of a support member provided by other embodiments of the present application; and
FIG. 12 is a sectional view of the B-B position in FIG. 5 (the accommodation part is formed by thinning).

Reference signs:10-box; 11-first part; 12-second part; 20-battery cell; 21-housing; 211-end cover; 212-liquid injection hole; 213-electrode terminal; 214-pressure relief mechanism; 215-insulation member; 216-casing; 22-electrode assembly; 221-main body; 222-tab; 2221-root part; 2222-tab part; 22221-first connecting portion; 22222-bending portion; 22223-second connecting portion; 24-support member; 241-wing part; 2411-accommodation part; 2412-first surface; 2413-second surface; 2414-support part; 242-body part; 243-reinforcement part; 25-current collector member ;100-battery; 200-controller; 300-motor; 1000-vehicle.

### Detailed Description of Embodiments

In order to make the purposes, technical solutions and advantages of the embodiments of the present application clearer, the technical solutions in the embodiments of the present application will be clearly described below in conjunction with the drawings in the embodiments of the present application. Obviously, the described embodiments are some of the embodiments, not all of them. Based on the embodiments in the present application, all other embodiments obtained by those of ordinary skill in the art without paying creative efforts fall within the scope of protection of the present application.

Unless otherwise defined, all technical and scientific terms used in the present application have the same meanings as commonly understood by those skilled in the art of the present application; the terms used in the description of the present application are for the purpose of describing specific examples only and are not intended to limit the present application; the terms "including" and "having" and any variations thereof in the description and claims of the present application and the above description of the drawings are intended to cover non-exclusive inclusion. The terms "first", "second", etc. in the description and claims of the present application or the above-mentioned drawings are used to distinguish different objects, rather than to describe a specific order or priority relationship

Reference made herein to "embodiment/example" means that a particular feature, structure, or characteristic described in connection with the embodiment may be included in at least one embodiment/example of the present application. The phases occurring in various places in the specification do not necessarily all refer to the same embodiment, nor are separate or alternative embodiments mutually exclusive of other embodiments.

In the description of the present application, it should be indicated that unless otherwise clearly specified and limited, technical terms such as "install", "link", "connect" and "attach" should be understood in a broad sense, for example, it may be a fixed connection, or a detachable connection, or an integral connection; it may be a direct connection, or an indirect connection through an intermediary, or it may be an internal communication between two elements. Those of ordinary skill in the art may understand the specific meanings of the above terms in the embodiments of the present application according to specific situations.

The term "and/or" in the present application indicates only an association relationship describing associated objects, meaning that there may be three kinds of relationships. For example, A and/or B may indicate three situations: there is only A, there are both A and B, and there is only B. In addition, the character "/" in the present application generally indicates that the associated objects therebefore and thereafter have an "or" relationship.

In the embodiments of the present application, the same reference signs represent the same components, and for the sake of simplicity, detailed descriptions of the same components in different embodiments are omitted. It should be understood that the thickness, length, width and other dimensions of various components in the embodiments of the present application shown in the drawings, as well as the overall thickness, length and width of the integrated device, are only illustrative and should not constitute any limitation to the present application.

"Plurality/multiple" appearing in the present application means two or more (including two).

In the present application, the battery cell may include lithium ion secondary battery cell, lithium ion primary battery cell, lithium sulfur battery cell, sodium lithium ion battery cell, sodium ion battery cell or magnesium ion battery cell, etc., which is not limited in the embodiments of the present application. The battery cell may be in a shape of cylinder, flat body, cuboid or in other shape, which is not limited in the embodiments of the present application. Battery cells are generally divided into three types according to packaging methods: cylindrical battery cells, square battery cells and pouch battery cells, which are not limited in the embodiments of the present application.

The battery mentioned in embodiments of the present application refers to a single physical module that includes one or more battery cells to provide higher voltage and capacity. For example, the battery mentioned in the present application may include a battery module or a battery pack, and the like. The battery generally includes a box for packaging one or more battery cells. The box may prevent a liquid or other foreign object from affecting the charging or discharging of the battery cells.

The battery cell includes an electrode assembly and an electrolytic solution, the electrode assembly being composed of a positive electrode plate, a negative electrode plate and a separator. The battery cell works mainly by moving metal ions between the positive electrode plate and negative electrode plate. The positive electrode plate includes a positive current collector and a positive electrode active material layer. The positive electrode active material layer is coated on the surface of the positive current collector, the positive current collector not coated with the positive electrode active material layer protrudes from the positive current collector coated with the positive electrode active material layer, and the positive current collector not coated with the positive electrode active material layer is used as the positive sub-tab. Taking a lithium-ion battery as an example, the material of the positive current collector may be aluminum, and the positive electrode active material may be lithium cobaltate, lithium iron phosphate, ternary lithium, or lithium manganate, etc. The negative electrode plate includes a negative current collector and a negative electrode active material layer. The negative electrode active material layer is coated on the surface of the negative current collector, the negative current collector not coated with the negative electrode active material layer protrudes from the negative current collector coated with the negative electrode active material layer, and the negative current collector not coated with the negative electrode active material layer is used as the negative sub-tab. The material of the negative current collector may be copper, and the negative electrode active material may be carbon or silicon, etc. In order to ensure that a large current passes without fusing, the number of positive sub-tabs is multiple and the positive sub-tabs are stacked together, and the number of negative sub-tabs is multiple and the negative sub-tabs are stacked together. The material of the separator may be PP (polypropylene) or PE (polyethylene), etc. In addition, the electrode assembly may be in a winding structure or may be in a laminated/stacked structure, which is not limited in the embodiments of the present application.

At present, from the perspective of the development of the market situation, the application of batteries is becoming more and more extensive. The batteries are not only used in energy storage power source systems such as hydraulic, thermal, wind and solar power plants, but also widely used in electric means of transport such as electric bicycles, electric motorcycles, electric vehicles, as well as fields of military equipment and aerospace, etc. With the continuous expansion of battery application fields, its market demand is also constantly increasing.

For the development of battery technology, many design factors need to be considered at the same time, for example, performance parameters such as energy density, cycle life, discharge capacity, and charge-discharge rate. In addition, the safety of the battery also needs to be considered. However, the safety of current battery cells is poor.

The inventors found through further researches that the battery cell includes at least one electrode assembly, each of which is a component where electrochemical reactions occur, in the battery cell. The electrode assembly is mainly formed by winding or stacking the positive electrode plate and the negative electrode plate, and a separator is generally provided between the positive electrode plate and the negative electrode plate. The parts having the active material of the positive electrode plate and the negative electrode plate constitute the main body of the electrode assembly, the parts having no active material of the positive electrode plate and the negative electrode plate respectively form sub-tabs, and in order to ensure that large current passes without fusing, the number of the sub-tabs is multiple and the sub-tabs are stacked together to form the tab. The end of the tab away from the main body is electrically connected to other conductive parts, to output the electric energy of the battery cell. After the tab is electrically connected to the conductive part, there is still a part of the length left. This part of the tab is located between the conductive part and the main body without constraint, such that bifurcating and insertion of the tab easily occur when being subjected to an external force, and the bifurcated part may easily be inserted into the main body, to come into contact with the positive electrode plate or the negative electrode plate in the main body, causing a short circuit and causing fire or even explosion in severe cases, resulting in poor safety of the battery cell.

In view of this, embodiments of the present application provide a battery cell, where the battery cell includes a housing, at least one electrode assembly and a support member. The housing has a wall part. The electrode assembly has a main body and at least one tab. In the first direction, the tab protrudes from an end of the main body facing the wall part. The tab includes a root part and a tab part, and the root part connects the main body and the tab part. The support member is provided at one side of the main body facing the wall part. The support member includes at least one wing part, and the tab part is bent around the wing part. In the above, the wing part is provided with an accommodation part, and the accommodation part is used to accommodate a portion of the root part.

The support member is provided between the wall part and the main body of the battery cell, and the tab part is bent around the corresponding wing part of the support member, so that the tab part is folded in a fixed shape, which can protect the tab, making bifurcating and insertion of the tab not easy, and improving the safety of the battery cell.

In addition, the hardness of the root part of the tab is relatively large. In the first direction, the highest portion of the root part exceeds the joint of the root part and the tab part. The total space occupied by the wing part and root part is larger, resulting in a relatively small energy density of the battery cell. In the embodiments of the present application, by providing an accommodation part on the wing part of the support member, the root part of the tab can be accommodated in the accommodation part, so that the total space occupied by the wing part and the root part is reduced, and the space left for the main body may be relatively increased, facilitating improving the energy density of battery cell.

The technical solutions described in the embodiments of the present application are applicable to the battery and the electrical device using the battery.

The electrical device may be vehicle, mobile phone, portable device, laptop, ship, spacecraft, electric toy and electric tool, etc. The spacecraft includes airplane, rocket, space shuttle and space ship, etc. The electric toy includes a fixed or mobile electric toy, for example, game console, electric car toy, electric ship toy and electric airplane toy, etc. The electric tool includes metal cutting electric tool, grinding electric tool, assembly electric tool and railway electric tool, for example, electric drill, electric grinder, electric wrench, electric screwdriver, electric hammer, impact electric drill, concrete vibrator and electric planer, etc. The embodiments of the present application do not specifically limit the above electrical device.

For convenient description, the following embodiments are described by taking a vehicle 1000 as an electrical device as example.

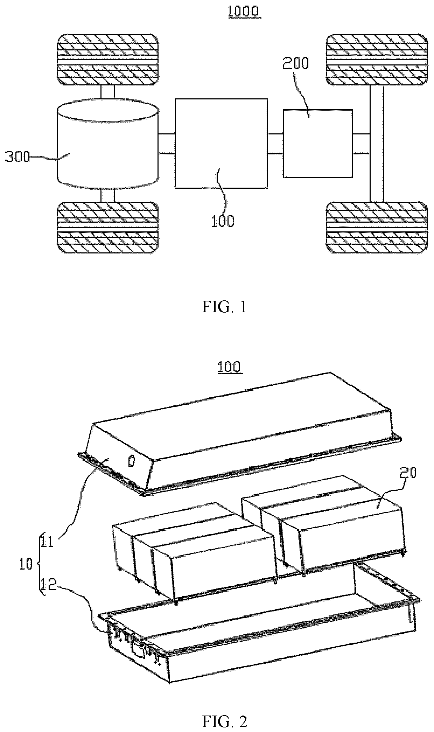

Referring to FIG. 1, FIG. 1 is a schematic structural diagram of a vehicle 1000 provided by some embodiments of the present application. The vehicle 1000 may be an oil-fueled vehicle, a gas vehicle, or a new energy vehicle. The new energy vehicle may be a pure electric vehicle, a hybrid electric vehicle, an extended-range vehicle, or the like. A battery 100 is disposed inside the vehicle 1000, and the battery 100 may be disposed at a bottom, head or tail of the vehicle 1000. The battery 100 may be used for supplying power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referring to FIG. 2, FIG. 2 is an exploded view of a battery 100 provided by some embodiments of the present application. The battery 100 includes a box 10 and battery cells 20, and the battery cells 20 are accommodated in the box 10. In the above, the box 10 is used to provide an accommodation space for the battery cells 20, and the box 10 may be in a variety of structures. In some embodiments, the box 10 may include a first part 11 and a second part 12. The first part 11 and the second part 12 cover each other. The first part 11 and the second part12 jointly define an accommodation space for accommodating the battery cells 20. The second part 12 may be in a hollow structure with one side open, and the first part 11 may be in a plate-like structure. The first part 11 covers the open side of the second part 12, so that the first part 11 and the second part 12 jointly define an accommodation space; and the first part 11 and the second part 12 may also be both in a hollow structure with one side open, and the open side of the first part 11 covers the open side of the second part 12. Of course, the box 10 formed by the first part 11 and the second part 12 may be in various shapes, such as a cylinder, a cuboid and so on.

In the battery 100, there may be multiple battery cells 20, and the multiple battery cells 20 may be in serial, parallel or hybrid connection with each other. The hybrid connection means that the multiple battery cells 20 are connected with each other both in series and in parallel. The multiple battery cells 20 may be in direct serial, parallel or hybrid connection with each other, and then the whole composed of the multiple battery cells 20 is accommodated in the box 10. Certainly, the battery 100 may be formed in the way that the multiple battery cells 20 are first in serial or in parallel or in hybrid connection with each other to form battery modules, and then the multiple battery modules are in serial or in parallel or in hybrid connection with each other to form a whole, and accommodated in the box 10. The battery 100 may further include other structures. For example, the battery 100 may further include a bus component for realizing electrical connection between the multiple battery cells 20.

In the above, each battery cell 20 may be a secondary battery cell or a primary battery cell; or may also be a lithium-sulfur battery cell, a sodium-ion battery cell or a magnesium-ion battery cell, which is not limited thereto. The battery cell 20 may be in a shape of cylinder, flat body, cuboid or in other shape.

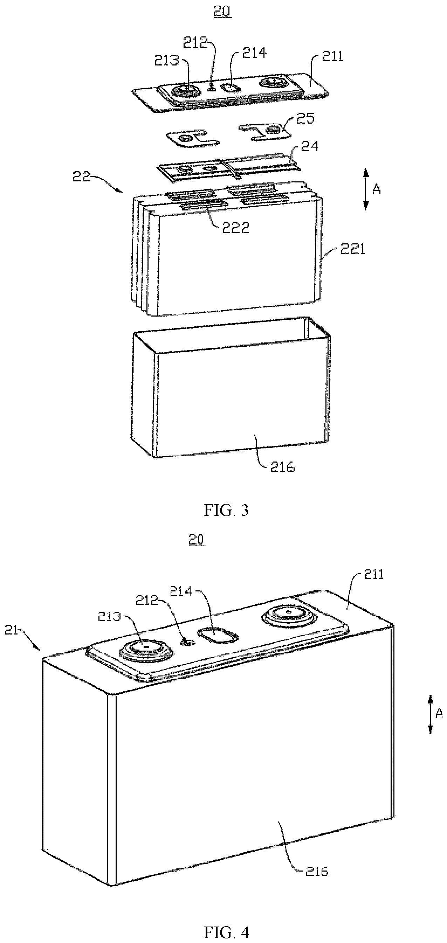

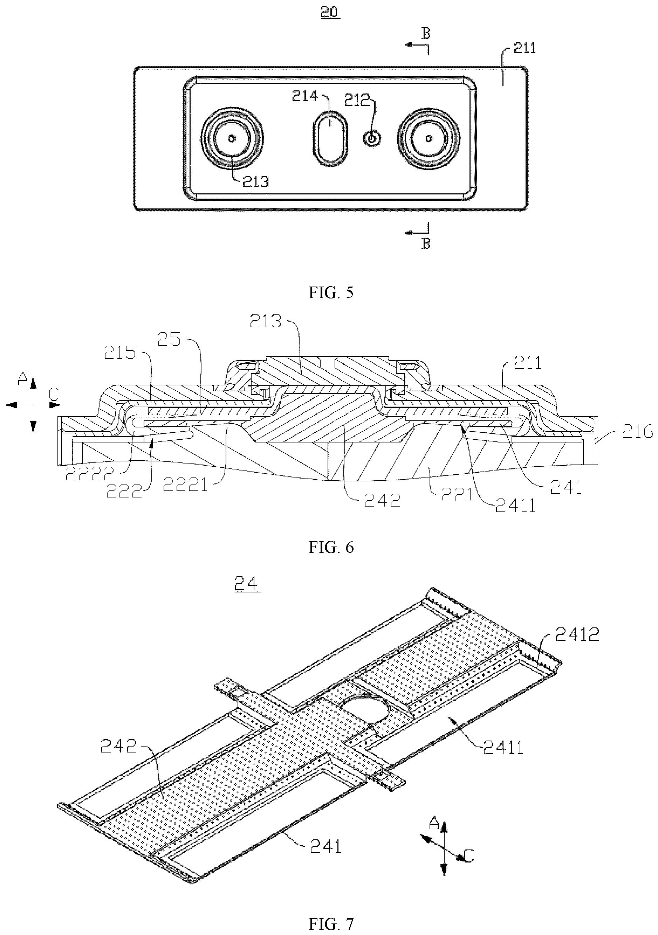

Referring to FIG. 3, FIG. 4, FIG. 5 and FIG. 6, FIG. 3 is an exploded view of a battery cell 20 provided by some embodiments of the present application. FIG. 4 is a schematic structural diagram of a battery cell 20 provided by some embodiments of the present application. FIG. 5 is a schematic top view of a battery cell 20 provided by some embodiments of the present application. FIG. 6 is a sectional view of the B-B position in FIG. 5 (the accommodation part 2411 is an accommodation groove). Embodiments of the present application provide a battery cell 20, where the battery cell 20 includes a housing 21, electrode assemblies 22 and a support member 24. The housing 21 has a wall part. The electrode assembly 22 has a main body 221 and tabs 222. In the first direction, the tab 222 protrudes from an end of the main body 221 facing the wall part. The tab 222 includes a root part 2221 and a tab part 2222, and the root part 2221 connects the main body 221 and the tab part 2222. The support member 24 is provided at one side of the main body 221 facing the wall part. The support member 24 includes wing parts 241, and the tab part 2222 is bent around the corresponding wing part 241. In the above, the wing part 241 is provided with an accommodation part 2411, and the accommodation part 2411 is used to accommodate a portion of the root part 2221.

The housing 21 includes an end cover 211 and a casing 216. The casing 216 has an accommodation space open at one end, and the accommodation space is used to accommodate the electrode assembly 22. The end cover 211 is connected to the casing 216 and closes the opening.

The end cover 211 refers to a component that covers the opening of the casing 216 to isolate the internal environment of the battery cell 20 from the external environment. Without limitation, the shape of the end cover 211 may be adapted to the shape of the casing 216 to fit the casing 216. Optionally, the end cover 211 may be made of a material with a certain hardness and strength (such as aluminum alloy). In this way, the end cover 211 is less likely to deform when subjected to extrusion and collision, enabling the battery cell 20 to have higher structural strength, and also improved safety performance. The end cover 211 may also be made of a variety of materials, such as copper, iron, aluminum, stainless steel, aluminum alloy, plastic, etc., which is not specially defined in the embodiment of the present application. Optionally, the battery cell 20 further includes electrode terminals 213, and the electrode terminal 213 is provided on the end cover 211. The electrode terminal 213 may be used to be electrically connected with the electrode assembly 22 for outputting the electric energy of the battery cell 20 or inputting the electric energy into the battery cell. Optionally, the battery cell 20 further includes a pressure relief mechanism 214. The pressure relief mechanism 214 is provided on the end cover 211. The pressure relief mechanism 214 is used to be opened when the internal pressure or temperature of the battery cell 20 reaches the bursting pressure to release the internal pressure of the battery cell 20. In some embodiments, the battery cell 21 further includes an insulation member 215, the insulation member 215 is provided at the inner side of the end cover 211, and the insulation member 215 may be used to isolate the electrical connection parts in the casing 216 from the end cover 211 to reduce the risk of short circuit. Exemplarily, the insulation member 215 may be plastic, rubber or the like. In some embodiments, the battery cell 20 further includes a liquid injection hole 212, and the liquid injection hole 212 is provided in the end cover 211. The electrolytic solution may be injected into the interior of the battery cell 20 through the liquid injection hole 212.

The casing 216 is a component used to cooperate with the end cover 211 to form an internal environment of the battery cell 20, wherein the formed internal environment may be used to accommodate an electrode assembly, an electrolytic solution, and other components. The casing 216 and the end cover 211 may be independent components, and the casing 216 may be provided with an opening, wherein the internal environment of the battery cell 20 may be formed by making the end cover 211 cover the opening at the opening. Without limitation, the end cover 211 and the casing 216 may also be integral. Specifically, the end cover 211 and the casing 216 may form a common joint surface before other components enter the casing, and when needing to package the inside of the casing 216, the end cover 211 is made to cover the casing 216. The casing 216 may be in various shapes and of various sizes, such as cuboid, cylinder, hexagonal prism and so on. Specifically, the shape of the casing 216 may be determined by the specific shape and size of the electrode assembly 22. The casing 216 may be made of a variety of materials, such as copper, iron, aluminum, stainless steel, aluminum alloy, plastic, etc., which is not specially defined in the embodiment of the present application.

The housing 21 has multiple walls, such as a bottom wall, a side wall, a top wall, etc. The wall part specifically refers to a wall among the multiple walls that is opposite to the tab 222. For example, if the tab 222 is provided opposite to the bottom wall, the wall part refers to the bottom wall of the casing 216. For another example, if the tab 222 is provided opposite to the top wall, the wall part refers to the top wall of the casing 216. For another example, if the tab 222 is provided opposite to the side wall, the wall part refers to the side wall. For another example, if the tab 222 is provided opposite to the end cover 221, the wall part may also refer to the end cover 211.

The electrode assembly 22 is a component in the battery cell 20 where electrochemical reactions occur. One or more electrode assemblies may be contained within the housing 21. The electrode assembly is mainly formed by winding or stacking the positive electrode plate and the negative electrode plate, and a separator is generally provided between the positive electrode plate and the negative electrode plate. The portions of the positive electrode plate and the negative electrode plate that contain active material constitute the main body 221 of the electrode assembly 22, and the portions of the positive electrode plate and the negative electrode plate that do not contain active material constitute respective sub-tabs. In order to ensure that a large current passes without fusing, the number of the sub-tabs is multiple and the sub-tabs are stacked together. The positive electrode tab and the negative electrode tab may be located together at one end of the main body 221 or respectively located at two ends of the main body 221. During the charging and discharging processes of the battery 100, the positive active material and the negative active material react with the electrolytic solution, and the tabs 222 are connected to the electrode terminals 213 to form a current loop. The tabs 222 protrude from the main body 221 to facilitate connection with the electrode terminals 213 to output electric energy from the battery cell 20 or to input electric energy into the battery cell 20.

In the present embodiment, the tab 222 protrudes from one end of the main body 221 in the first direction. Referring to FIG. 3 to FIG. 6, the first direction may be A direction shown in the drawings. Optionally, the first direction may also be understood as the thickness direction of the wall part or support member 24.

The root part 2221 is the portion where the plurality of sub-tabs 222 begin to protrude from the main body 221 and are gathered and stacked together. The hardness of the root part 2221 is usually greater and is not easy to bend. The tab part 2222 is the other part of the tab 222, except the root part 2221. Compared with the root part 2221, the tab part 2222 is easier to bend, and is prone to deformation and bifurcation when subjected to external force without constraint. Referring to FIG. 6, the boundary between the root part 2221 and the tab part 2222 is shown with a dotted line to facilitate showing the positions of the root part 2221 and the tab part 2222. The dotted lines here are only to show the positions of the root part 2221 and the tab part 2222, and have no other meaning.

The support member 24 is located in the housing 21, and located at one side of the main body 221 facing the wall part. The tab 222 is bent around the support member 24, and the support member 24 can support the tab 222. Specifically, the support member 24 has wing parts 241, and the tab part 2222 of the tab 222 is bent around the wing part 241. "The tab part 2222 is bent around the wing part 241" refers to that starting from one side of the wing part 241 facing the main body 221, the tab part 2222 is bent at the edge of the wing part 241, and extends to one side of the wing part 241 facing away from the main body 221.

When the accommodation part 2411 is provided at the wing part 241, the accommodation part 2411 may accommodate a portion of the root part 22221, such that the total space occupied by the wing part 241 and the root part 2221 is reduced,

The support member 24 is provided between the wall part and the main body 221 of the battery cell 20, and the tab part 2222 is bent around the corresponding wing part 241 of the support member 24, so that the tab part 2222 is folded in a fixed shape, which can protect the tab 222, making bifurcating and insertion of the tab 222 not easy, and improving the safety of the battery cell 20. In addition, the hardness of the root part 2221 of the tab 222 is relatively large. In the first direction, the highest portion of the root part 2221 exceeds the joint of the root part 2221 and the tab part 2222. The total space occupied by the wing part 241 and root part 2221 is larger, resulting in a relatively small energy density of the battery cell 20. In the embodiments of the present application, by providing an accommodation part 2411 on the wing part 241 of the support member 24, the root part 2221 of the tab 222 can be accommodated in the accommodation part 2411, so that the total space occupied by the wing part 241 and the root part 2221 is reduced, and the space left for the main body 221 may be relatively increased, facilitating improving the energy density of battery cell 20.

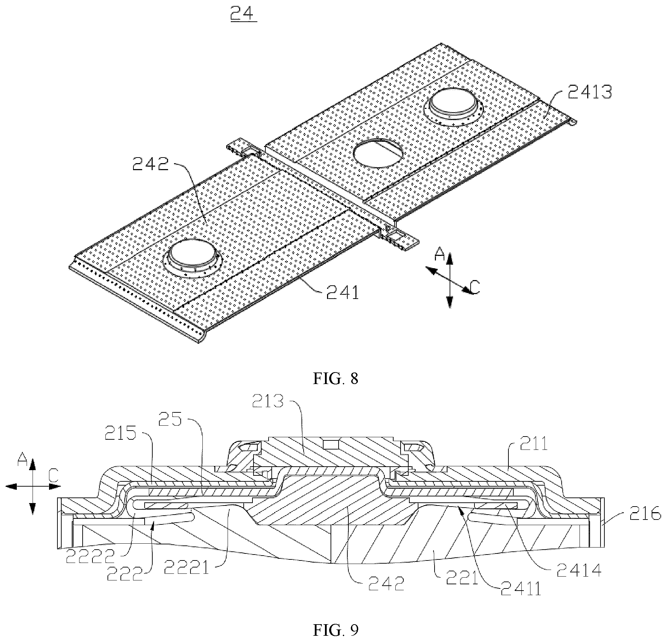

Referring to FIG. 3, FIG. 4, FIG. 5, FIG. 6, FIG. 7 and FIG. 8, FIG. 7 is an exploded view of a front structure of a support member 24 provided by some embodiments of the present application. FIG. 8 is a schematic diagram of a back structure of a support member 24 provided by some embodiments of the present application. In some embodiments, in the first direction, the wing part 241 has a first surface 2412 facing the main body 221, and the accommodation part 2411 is an accommodation groove recessed from the first surface 2412 in a direction away from the main body 221.

In some embodiments, the front side of the support member 24 refers to the side of the support member 24 facing the main body 221 in the first direction. The back side of the support member 24 refers to the side of the support member 24 facing away from the main body 221 in the first direction.

The accommodation part 2411 is a groove provided in the wing part 241, and the open end of the accommodation part 2411 faces the main body 221, so that the root part 2221 can extend into the accommodation part 2411. In other words, in the first direction, the accommodation part 2411 is recessed from the surface of the wing part 241 facing the main body 221 toward the surface of the wing part 241 facing away from the main body 221.

When the accommodation part 2411 is a groove, it can not only accommodate a portion of the root part 2221, so that the total space occupied by the wing part 241 and the root part 2221 is reduced, but also enable the wing part 241 to have higher strength.

In some embodiments, in the second direction, the wing part 241 has a first end and a second end that are oppositely arranged, and the tab part 2222 is bent around the second end. The groove bottom surface of the accommodation groove is an inclined surface, and the distance between the inclined surface and the main body 221 in the first direction gradually decreases in the direction from the first end to the second end.

The second direction may be the width direction of the support member 24. Referring to FIG. 3 to FIG. 8, the second direction may be C direction shown in the drawings.

The groove bottom wall of the accommodation groove is provided as an inclined surface, so that the depth of the accommodation groove gradually changes in the direction from the first end to the second end, ensuring that the accommodation groove accommodates the root part 2221 and simultaneously the wing part 241 is enabled to have higher strength.

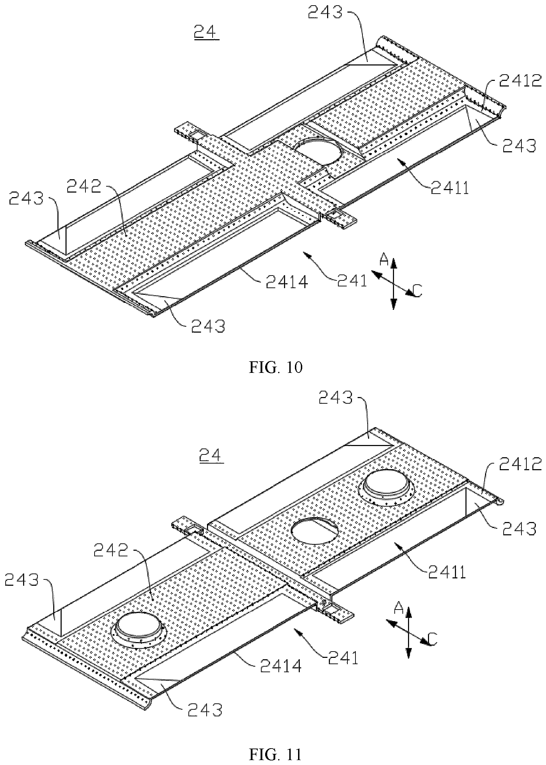

Referring to FIG. 3, FIG. 4, FIG. 5, FIG. 6, FIG. 9, FIG. 10 and FIG. 11, FIG. 9 is a sectional view of the B-B position in FIG. 5 (the accommodation part 2411 is a through hole); FIG. 10 is a schematic diagram of a front structure of a support member 24 provided by other embodiments of the present application. FIG. 11 is a schematic diagram of a back structure of a support member 24 provided by other embodiments of the present application. In other embodiments, in the first direction, the wing part 241 has a first surface 2412 facing the main body 221 and a second surface 2413 facing away from the main body 221, and the accommodation part 2411 is a through hole running through the first surface 2412 and the second surface 2413.

The accommodation part 2411 is a through hole provided in the wing part 241, and one open end of the accommodation part 2411 faces the main body 221, so that the root part 2221 can extend into the accommodation part 2411. In other words, in the first direction, the accommodation part 2411 penetrates through the surface of the wing part 241 facing the main body 221 toward the surface of the wing part 241 facing away from the main body 221.

When the accommodation part 2411 is a through hole, more accommodation space may be provided for the root part 2221, so that most of the root part 2221 may be accommodated in the accommodation part 2411 or the root part 2221 may be allowed to pass through the accommodation part 2411, so that the total space occupied by the wing part 241 and the root part 2221 is further reduced, facilitating improving the energy density of battery cell 20.

Referring to FIG. 9, FIG. 10 and FIG. 11, in some embodiments, the wing part 241 further includes a support part 2414. The support part 2414 is located at one side of the accommodation part 2411 in the second direction. The tab part 2222 is bent around the support member 2414, and the support member 2414 is used to support the tab part 2222. The second direction is perpendicular to the first direction.

The support part 2414 can be understood as the remaining portion of the wing part 241 after the accommodation part 2411 is provided. Of course, in order to ensure the shaping effect of the tab part 2222, the support part 2414 is located at one end of the support member 24 in the second direction and at one side of the accommodation part 2411, and the tab part 2222 is bent around the support part 2414 to enable the support part 2414 to support the tab part 2222.

Referring to FIG. 9, FIG. 10 and FIG. 11, in the present embodiment, the accommodation part 2411 is a rectangular through hole provided in the wing part 241. The support part 2414 is a strip structure located at one side of the accommodation part 2411 in the second direction. The support part 2414 is located at the edge of the support member 24, facilitating the tab part 2222 being bent around the support part 2414.

The wing part 241 is provided with a support part 2414, and the support member 2414 can support the tab part 2222, such that the tab part 2222 bent around the support part 2414 can maintain a fixed shape when being folded and the tab part 2222 is not easy to deform, making bifurcating and insertion of the tab 222 not easy, and improving the safety of the battery cell 20. If the tab part 2222 is not supported by the support part 2414, the tab part 2222 is easy to deform when subjected to external force and cannot maintain a fixed shape when being folded.

Referring to FIG. 10 and FIG. 11, in some embodiments, reinforcement parts 243 are provided in the accommodation part 2411.

The reinforcement part 243 is a structure for reinforcing the strength of the wing part 241. The reinforcement part 243 may be a strengthening rib, a reinforcing rib, a reinforcing plate, etc.

Optionally, in order to reduce the risk of interference between the reinforcement part 243 and the root part 2221, the reinforcement part 243 is provided at a corner position of the accommodation part 2411. For example, the accommodation part 2411 is a rectangular through hole provided in the wing part 241. The reinforcement parts 243 may be strengthening ribs provided at the four corners of the accommodation part 2411.

By providing the reinforcement parts 243 in the accommodation part 2411, the strength of the wing part 241 is strengthened, so that the wing part 241 is not easily deformed, thereby maintaining the fixed shape of the tab part 2222, reducing the risk of tab 222 damage caused by deformation of the wing part 241, and improving the safety of battery cell 20.

In some embodiments, an arc transition is formed between the side wall of the accommodation part 2411 and the first surface 2412.

When the accommodation part 2411 is an accommodation groove, the accommodation part 2411 includes a groove bottom wall and a groove side wall, wherein the groove side wall is provided along the edge of the groove bottom wall. The side wall of the accommodation part 2411 refers to the groove side wall of the accommodation groove. When the accommodation part 2411 is a through hole, the side wall of the accommodation part 2411 is the hole wall of the through hole.

Since the root part 2221 of the tab 222 is partially accommodated in the accommodation part 2411, the tab 222 is easy to be in contact with the joint of the side wall of the accommodation part 2411 and the first surface 2412. By forming the arc transition between the side wall of the accommodation part 2411 and the first surface 2412, the risk of the tab 222 being cut is reduced, facilitating improving the safety of battery cell 20.

In some embodiments, in the third direction, the size of the accommodation part 2411 is larger than the size of the root part 2221. The third direction is perpendicular to the first direction.

The third direction is any direction perpendicular to the first direction. For example, the third direction may be the length direction of the support member 24 or the width direction of the support member 24. When the third direction is the width direction of the support member 24, the third direction and the second direction are the same.

In the present embodiment, the third direction is the length direction of the support member 24.

The size of the accommodation part 2411 in the third direction is larger than the size of the root part 2221 in the third direction, facilitating reducing the requirements for the assembly accuracy of the support member 24, so that even if the position of the support member 24 has a certain deviation, the root part 2221 can extend into the accommodation part 2411.

Referring to FIG. 3, FIG. 4, FIG. 5, and FIG. 12, FIG. 12 is a sectional view of the B-B position in FIG. 5 (the accommodation part 2411 is formed by thinning). In some embodiments, in the first direction, the wing part 241 has a first surface 2412 facing the main body 221. In the second direction, the wing part 241 has a first end and a second end that are oppositely arranged, and the tab part 2222 is bent around the second end. The first surface 2412 is an inclined surface, and in the direction from the first end to the second end, the distance between the inclined surface and the main body 221 gradually decreases in the first direction, so as to form the accommodation part 2411 at one side of the wing part 241 facing the main body 221.

The first surface 2412 is an inclined surface, and the first end is further away from the main body 221 than the second end. In short, the first inclined surface is provided inclinedly, downward, from the first end to the second end.

The first surface 2412 is provided as an inclined surface, and the first end is further away from the main body 221 than the second end. **In** this way, the space between the first end and the main body 221 is larger than the space between the second end and the main body 221, to form the accommodation part 2411 at a position near the first end, so that the root part 2221 is accommodated in the accommodation part 2411, and the total space occupied by the wing part 241 and the root part 2221 is reduced, which is beneficial to improving the energy density of the battery cell 20.

**In** some embodiments, the wing part 241 has a second surface 2413 facing away from the main body 221. The second surface 2413 is perpendicular to the first direction.

The second surface 2413 is a plane (horizontal surface), and the second surface 2413 is perpendicular to the first direction, indicating that the second surface 2413 is not inclined. In this way, in the first direction, the wing part 241 may be regarded as being gradually thinned in a direction from the second end to the first end to form an accommodation part 2411 at the side of the wing part 241 facing the main body 221.

In other embodiments, the second surface 2413 is parallel to the first surface 2412. At this time, it can be regarded as that the wing part 241 is provided inclinedly so as to form the accommodation part 2411 at one side of the wing part 241 facing the main body 221.

In some embodiments, in the first direction, the portion of root part 2221 farthest from the main body 221 is accommodated in the accommodation part 2411.

The portion of root part 2221 farthest from the main body 221 may be understood as: the highest portion of the root part 2221 in the direction from the main body 221 to the wall part.

The portion of the root part 2221 farthest from the main body 221 is accommodated in the accommodation part 2411, so that the total space occupied by the wing part 241 and the root part 2221 is reduced, facilitating improving the energy density of battery cell 20.

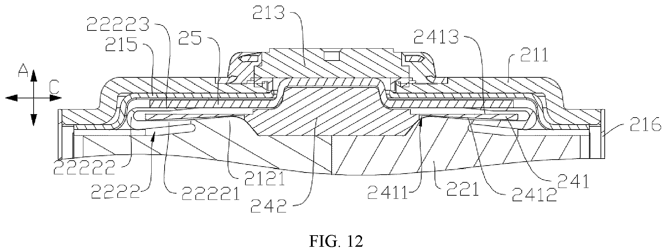

Referring to FIG. 12, in some embodiments, the tab part 2222 includes a first connecting portion 22221, a second connecting portion 22223, and a bending portion 22222. The bending portion 22222 connects the first connecting portion 22221 and the second connecting portion 22223. The first connecting portion 22221 is connected to the root part 2221. In the first direction, the first connecting portion 22221 and the second connecting portion 22223 are respectively located at two sides of the wing part 241.

The first connecting portion 22221 is a portion of the tab part 2222 located at the side of the wing part 241 facing the main body 221 in the first direction.

The bending portion 22222 is a portion of the tab part 2222 located at one side of the wing part 241 in the second direction.

The second connecting portion 22223 is a portion of the tab part 2222 located at one side of the wing part 241 facing away from the main body 221 in the first direction. The second connecting portion 22223 is electrically connected to a conductive part, to output electric energy from the battery cell 20 or to input electric energy into the battery cell 20.

The first connecting portion 22221 is connected to the root part 2221, and the second connecting portion 22223 is used to be connected to a conductive part to facilitate the output of the electric energy of the battery cell 20. The first connecting portion 22221 and the second connecting portion 22223 are respectively located at two sides of the wing part 241 and connected by the bending portion 22222, in this way, the tab part 2222 is folded in a fixed shape, realizing the shaping of the tab 222, making bifurcating and insertion of the tab 222 not easy, and improving the safety of the battery cell 20.

In some embodiments, the support member 24 includes a body part 242. In the second direction, at least one side of the body part 242 is provided with a wing part 241, and the tab part 2222 is bent around an end of the wing part 241 away from the body part 242. The body part 242 is used to abut against the main body 221. The second direction is perpendicular to the first direction.

The body part 242 is a portion of the support member 24 for abutting against the main body 221. The body part 242 is connected with the wing part 241 to realize the positioning of the wing part 241.

The first end is one end of the wing part 241 connected to the body part 242 in the second direction, and the second end is one end of the wing part 241 away from the body part 242 in the second direction.

The support part 2414 is provided at one side of the accommodation part 2411 facing away from the body part 242 in the second direction.

In the scenario where cells are inverted, the body part 242 may support the main body 221, so that the gravity of the main body 221 is not easily transmitted to the tabs 222, making it not easy to cause tab 222 bifurcating and insertion, and improving the safety of the battery cell 20. Of course, in other scenarios, such as when the battery cell 20 is vibrated, the body part 242 may also abut against the main body 221, so that the external force is not easily transmitted to the tabs 222 through the main body 221, and it is not easy to cause the tab 222 bifurcating and insertion, improving the safety of the battery cell 20.

Referring to FIG. 12, in some embodiment, in the second direction, two sides of the body part 242 are each provided with the wing part 241. The electrode assembly 22 has two tabs 222, and the support member 24 is located between the two tabs 222. The tab part 2222 of one of the tabs 222 is bent around the corresponding wing part 241.

In the second direction, the two tabs 222 are located at two sides of the support member 24 respectively, and the two tabs 222 are both bent around the support member 24.

In some embodiments, in the second direction, the two opposite tabs 222 located at two sides of the support member 24 are both positive electrode tabs or both are negative electrode tabs. That is, in the second direction, the two opposite tabs 222 located at two sides of the support member 24 have same polarity.

By making the two tabs 222 bent around the two wing parts located at two sides of the body part 242 respectively, such one support member 24 may realize the shaping of the two tabs 222 located at the two sides of the support member 24, making bifurcating and insertion of both the two tabs 222 not easy and improving the safety of the battery cell 20.

In some embodiments, in the third direction, the electrode assembly 22 includes two spaced tabs 222, each of the two spaced tabs 222 is bent around one wing part 241. Any two of the first direction, the second direction and the third direction are perpendicular to each other. The two tabs 222 provided spaced in the third direction have different polarities. If one of them is positive electrode tab, the other is negative electrode tab.

In some embodiments, the wall part is directly connected with the tab part 2222.

The end cover 211 may form a protruding structure protruding toward the electrode assembly 22, so that the tab part 2222 is connected to the protruding structure to electrically connect the tab part 2222 to the end cover 211.

The tab 222 is electrically connected to the wall part directly, to output the electric energy of the battery cell 20 or input the electric energy into the battery cell through the wall part.

In some embodiments, the battery cell 20 includes at least one electrode terminal 213, the at least one electrode terminal 213 is provided on the wall part, and the electrode terminal 213 is directly connected to the tab part 2222.

The tab 222 is connected to the electrode terminal 213, to output the electric energy of the battery cell 20 or input the electric energy into the battery cell, through the electrode terminal 213.

In the present embodiment, the battery cell 20 includes electrode terminals 213 and current collector members 25, and the electrode terminal 213 is provided on the wall part. The current collector members 25 are electrically connected to the electrode terminals 213, and the current collector members 25 are directly connected to the tab parts 2222.

The current collector member 25 connects the second connecting portion 22223 and the electrode terminal 213 to electrically connect the tab 222 and the electrode terminal 213.

The tab 222 is connected to the current collector member 25, and the current collector member 25 is connected to the electrode terminal 213, to output the electric energy of the battery cell 20 or input the electric energy into the battery cell, through the electrode terminal 213.

Embodiments of the present application further provide a battery 100, which battery 100 includes at least one battery cell above 20.

Embodiments of the present application further provide an electrical device, including at least one battery 100 above. The battery 100 is used to provide electric energy for the electrical device.

According to some embodiments of the present application, reference is made to FIG. 3 to FIG. 12.

Embodiments of the present application provide a battery cell 20, where the battery cell 20 includes a housing 21, at least one electrode assembly 22 and a support member 24. The housing 21 has a wall part. The electrode assembly 22 has a main body 221 and at least one tab 222. In the first direction, the tab 222 protrudes from an end of the main body 221 facing the wall part. The tab 222 includes a root part 2221 and a tab part 2222, and the root part 2221 connects the main body 221 and the tab part 2222. The support member 24 is provided at one side of the main body 221 facing the wall part. The support member 24 includes at least one wing part 241, and the tab part 2222 is bent around the wing part 241. In the above, the wing part 241 is provided with an accommodation part 2411, and the accommodation part 2411 is used to accommodate a portion of the root part 2221.

The support member 24 is provided between the wall part and the main body 221 of the battery cell 20, and the tab part 2222 is bent around the corresponding wing part 241 of the support member 24, so that the tab part 2222 is folded in a fixed shape, which can protect the tab 222, making bifurcating and insertion of the tab 222 not easy, and improving the safety of the battery cell 20. In addition, the hardness of the root part 2221 of the tab 222 is relatively large. In the first direction, the highest portion of the root part 2221 exceeds the joint of the root part 2221 and the tab part 2222. The total space occupied by the wing part 241 and root part 2221 is larger, resulting in a relatively small energy density of the battery cell 20. In the embodiments of the present application, by providing an accommodation part 2411 on the wing part 241 of the support member 24, the root part 2221 of the tab 222 can be accommodated in the accommodation part 2411, so that the total space occupied by the wing part 241 and the root part 2221 is reduced, and the space left for the main body 221 may be relatively increased, facilitating improving the energy density of battery cell 20.

In the first direction, the wing part 241 has a first surface 2412 facing the main body 221, and the accommodation part 2411 is an accommodation groove recessed from the first surface 2412 in a direction away from the main body 221. The accommodation part 2411 is a groove provided in the wing part 241, and in the first direction, the accommodation part 2411 is recessed from the surface of the wing part 241 facing the main body 221 toward the surface of the wing part 241 facing away from the main body 221. When the accommodation part 2411 is a groove, it can not only accommodate a portion of the root part 2221, so that the total space occupied by the wing part 241 and the root part 2221 is reduced, but also enable the wing part 241 to have higher strength.

In the first direction, the wing part 241 has a first surface 2412 facing the main body 221 and a second surface 2413 facing away from the main body 221, and the accommodation part 2411 is a through hole running through the first surface 2412 and the second surface 2413. The accommodation part 2411 is a through hole provided in the wing part 241, and in the first direction, the accommodation part 2411 penetrates through the surface of the wing part 241 facing the main body 221 and the surface of the wing part 241 facing away from the main body 221. When the accommodation part 2411 is a through hole, more accommodation space may be provided for the root part 2221, so that most of the root part 2221 may be accommodated in the accommodation part 2411 or the root part 2221 may be allowed to pass through the accommodation part 2411, so that the total space occupied by the wing part 241 and the root part 2221 is further reduced, facilitating improving the energy density of battery cell 20.

In the first direction, the wing part 241 has a first surface 2412 facing the main body 221. In the second direction, the wing part 241 has a first end and a second end that are oppositely arranged, and the tab part 2222 is bent around the second end. The first surface 2412 is an inclined surface, and in the direction from the first end to the second end, the distance between the inclined surface and the main body 221 in the first direction gradually decreases, so as to form the accommodation part 2411 at one side of the wing part 241 facing the main body 221. The wing part 241 has a second surface 2413 facing away from the main body 221, and the second surface 2413 is perpendicular to the first direction. The wing part 241 may be regarded as being gradually thinned in a direction from the second end to the first end to form an accommodation part 2411 at the side of the wing part 241 facing the main body 221.

The above are only preferred embodiments of the present application and are not intended to limit the present application. For those skilled in the art, the present application may have various modifications and variations. Any modifications, equivalent replacements, improvements, etc., made within the spirit and principles of the present application, shall be included in the protection scope of the present application.

## Claims

1. A battery cell, comprising:
a housing, having a wall part;
an electrode assembly, having a main body and a tab, wherein in a first direction, the tab protrudes from one end of the main body facing the wall part, the tab comprises a root part and a tab part, and the root part is connected with the main body and the tab part; and
a support member, provided at one side of the main body facing the wall part, wherein the support member comprises a wing part, and the tab part is bent around the wing part,
wherein the wing part is provided with an accommodation part, and the accommodation part is configured to accommodate a portion of the root part.

2. The battery cell according to claim 1, wherein in the first direction, the wing part has a first surface facing the main body, and the accommodation part is an accommodation groove recessed from the first surface in a direction away from the main body.

3. The battery cell according to claim 1, wherein in the first direction, the wing part has a first surface facing the main body and a second surface facing away from the main body, and the accommodation part is a through hole running through the first surface and the second surface.

4. The battery cell according to claim 3, wherein the wing part further comprises a support part, the support part is located at one side of the accommodation part in a second direction, the tab part is bent around the support part, the support part is configured to support the tab part, and the second direction is perpendicular to the first direction.

5. The battery cell according to any one of claims 2-4, wherein reinforcement parts are provided inside the accommodation part.

6. The battery cell according to any one of claims 2-5, wherein an arc transition is formed between a side wall of the accommodation part and the first surface.

7. The battery cell according to any one of claims 2-6, wherein in a third direction, a size of the accommodation part is larger than a size of the root part; and
the third direction is perpendicular to the first direction.

8. The battery cell according to claim 1, wherein in the first direction, the wing part has a first surface facing the main body;
in a second direction, the wing part has a first end and a second end that are oppositely provided, and the tab part is bent around the second end; and
the first surface is an inclined surface, and in a direction from the first end to the second end, a distance between the inclined surface and the main body gradually decreases in the first direction, so as to form the accommodation part at one side of the wing part facing the main body.

9. The battery cell according to claim 8, wherein the wing part has a second surface facing away from the main body, and the second surface is perpendicular to the first direction.

10. The battery cell according to any one of claims 1-9, wherein in the first direction, a portion of the root part farthest from the main body is accommodated in the accommodation part.

11. The battery cell according to any one of claims 1-10, wherein the tab part comprises a first connecting portion, a second connecting portion and a bending portion, the bending portion connects the first connecting portion and the second connecting portion, the first connecting portion is connected to the root part, and in the first direction, the first connecting portion and the second connecting portion are respectively located at two sides of the wing part.

12. The battery cell according to any one of claims 1-11, wherein the support member comprises a body part, at least one side of the body part is provided with the wing part in the second direction, the tab part is bent around one end of the wing part away from the body part, the body part is configured to abut against the main body, and the second direction is perpendicular to the first direction.

13. The battery cell according to claim 12, wherein in the second direction, two sides of the body part are each provided with the wing part, the electrode assembly has two tabs, and the support member is located between the two tabs, and the tab part of one of the tabs is bent around a corresponding one of the wing parts.

14. The battery cell according to any one of claims 1-13, wherein the wall part is directly connected to the tab part.

15. The battery according to any one of claims 1-13, comprising:
an electrode terminal, provided on the wall part, wherein the electrode terminal is directly connected to the tab part.

16. The battery cell according to any one of claims 1-13, further comprising:
an electrode terminal, provided on the wall part; and
a current collector member electrically connected to the electrode terminal, wherein the current collector member is directly connected to the tab part.

17. A battery, comprising the battery cell according to any one of claims 1-16.

18. An electrical device, comprising the battery according to claim 17, wherein the battery is configured to provide electric energy for the electrical device.
